# EUROPEAN PATENT APPLICATION

(11) **EP 4 446 751 A1**
(43) Date of publication of application: **16.10.2024**
(21) Application number: 22903970.6
(22) Date of filing: 14.11.2022
(51) Int. Cl.: G01N 35/10

(54) **AUTOMATED ANALYSIS DEVICE**

(30) Priority: 07.12.2021 JP 2021198882
(71) Applicant: HITACHI HIGH-TECH CORPORATION, Tokyo 105-6409 (JP); F. Hoffmann-La Roche AG, 4070 Basel (CH); Roche Diagnostics GmbH, 68305 Mannheim (DE)
(72) Inventor: HAMASAKI Koshin, Tokyo 105-6409 (JP); TAKADA Eiichiro, Tokyo 105-6409 (JP); SAITO Yoshiaki, Tokyo 105-6409 (JP); KOBEL Stefan, 68305 Mannheim (DE); HABERHAUSEN Gerd, 68305 Mannheim (DE); VOELKER Markus, 68305 Mannheim (DE); FOSTER Elisabeth, 68305 Mannheim (DE)
(74) Representative: Strehl Schübel-Hopf & Partner
(86) International application number: PCT/JP2022/042161
(87) International publication number: WO 2023/106039

(57) **Abstract**

An automatic analyzer 101 includes a judgment part 118f which descends a probe 201 in the direction of a reagent 205 and suspends the downward movement of the probe 201 at a first position P_{T} higher than a liquid level value P₀ assumed to be a height of a liquid level by a first predetermined value D_{b}. The judgment part 118f determines that the reagent 205 is in a normal state when the liquid level is not detected by an electrostatic capacity sensor 206 at the first position P_{T}. Further, the judgment part 118f determines that the reagent 205 in an abnormal state when the liquid level is detected by the electrostatic capacity sensor 206 before reaching the first position P_{T}. An automatic analyzer capable of reducing consumption of consumables produced at the time of reagent registration compared with conventional cases is provided.

## Description

### Technical Field

The present invention relates to an automatic analyzer.

### Background Art

In patent document 1, description is made about an automatic analyzer that can sense, with high accuracy, erroneous detection of liquid level detection caused by bubbles generated in a liquid surface.

### Prior Art Document

Patent Document

Patent Document 1: JP-2020-112380-A

### Summary of the Invention

### Problem to be Solved by the Invention

Conventionally, an abnormality determination function of the automatic analyzer has been desired mainly for expensive large-size automatic analyzers introduced into large-scale facilities in developed countries. Meanwhile, in recent years, the introduction of the abnormality determination function has been desired also for small-size inexpensive automatic analyzers, and simultaneously has come to be desired also in emerging countries in which demands for small-size automatic analyzers are high.

In emerging countries, it is difficult to obtain purified water with such quality as to be used for the automatic analyzer, and the skill of a laboratory technician tends to be low compared with in developed countries. As a result, that is a circumstance that low water consumption performance and high usability functions are desired for the automatic analyzer side, and so forth.

Thus, it is desired to incorporate a function relating to needs for reduction in the running cost of consumables and so forth in addition to reduction in the initial cost at the time of analyzer introduction, and a function relating to usability of automatic determination of whether or not a bubble is mixed in a reagent.

On the other hand, when application of the bubble detection method of patent document 1 is attempted, there is a problem that extra washing water is consumed for probe washing after bubble detection operation or an extra chip is consumed in the case of a form in which a disposable chip is set at the tip of a probe.

The present invention provides an automatic analyzer capable of reducing consumption of consumables produced at the time of reagent registration compared with conventional cases.

### Means for Solving the Problem

The present invention includes a plurality of means for solving the above-described problem. To cite one example thereof, an automatic analyzer including a probe dispensing a liquid accommodated in a container, a detection part detecting a liquid level of the liquid, and a judgment part causing the probe to descend in a direction toward the liquid and suspending the descent of the probe at a first position higher than a liquid level value assumed to be a height of the liquid level by a first predetermined value and, at the first position, determining that an abnormality does not exist in the liquid when the liquid level is not detected by the detection part, and determining that an abnormality exists in the liquid when the liquid level is detected by the detection part before the probe reaches the first position.

### Advantages of the Invention

According to the present invention, consumption of consumables produced at the time of reagent registration can be reduced compared with conventional cases. Problems, configurations, and effects other than the above-described ones will be made apparent by the following description of embodiments.

### Brief Description of Drawings

Fig. 1 is a diagram showing a system configuration of an automatic analyzer according to a first embodiment of the present invention;
Fig. 2 is a diagram showing a configuration of a dispensing unit of the automatic analyzer according to the first embodiment;
Fig. 3 is a diagram showing an abnormality detection method using a real liquid level detection position;
Fig. 4 is a diagram showing an abnormality detection method using theoretical liquid level information of the automatic analyzer according to the first embodiment;
Fig. 5 shows a bubble detection workflow at the time of using a disposable chip in the automatic analyzer according to the first embodiment 1;
Fig. 6 shows a bubble detection workflow at the time of using a probe in an automatic analyzer according to a second embodiment of the present invention;
Fig. 7 shows part of a bubble detection workflow at the time of using an installed reagent in an automatic analyzer according to a third embodiment; and
Fig. 8 shows part of a bubble detection workflow at the time of using the installed reagent in the automatic analyzer according to the third embodiment.

### Modes for Carrying Out the Invention

Embodiments of the automatic analyzer of the present invention will be described below with use of the drawings. In the drawings used in the present specification, the same or corresponding constituent elements are given the same or similar numerals and repeated description is omitted regarding these constituent elements in some cases.

### <First Embodiment>

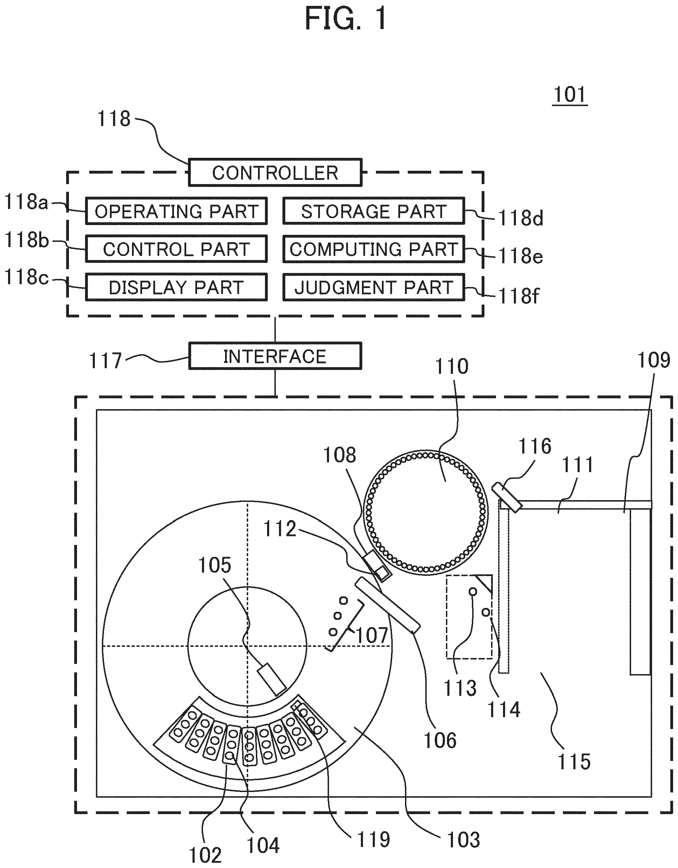

A first embodiment of the automatic analyzer will be described with use of FIGs. 1 to 5.

First, the overall configuration of an automatic analyzer 101 will be described with use of FIG. 1. FIG. 1 is a diagram schematically illustrating a plan view of the automatic analyzer.

As illustrated in FIG. 1, the automatic analyzer 101 includes a reagent disk 103, an RFID reader/writer 105, a dispensing unit 106, a washing tank 108, an incubator (reaction disk) 110, a chip sensor 112, a conveying unit 116, an interface 117, a controller 118, and so forth.

In the automatic analyzer 101 illustrated in FIG. 1, reaction containers 109 into which a dispensed solution is discharged line up on a circumference in the incubator 110. The reaction containers 109 are used in common in all reactions and are disposable. The incubator 110 is controlled by a drive mechanism such as a motor in such a manner as to be rotationally driven by a distance equivalent to a length of a predetermined number of reaction containers 109 in one cycle.

The reagent disk 103 for setting a plurality of reagent containers 102 is disposed on the analyzer. The reagent container 102 is composed of three reagent bottles 104 on one row. An IC tag 119 capable of contactless information communication by an RFID (Radio Frequency Identifier) is attached to an outer wall of the reagent container 102. One RFID reader/writer 105 for reading information in the IC tag 119 is disposed on the axis side of the reagent disk 103.

In the automatic analyzer 101, specific reagent information such as the initial reagent filling amount recorded in the IC tag 119 is read by the RFID reader/writer 105 and whether or not the reagent container 102 is available is determined by a judgement part 118f of the controller 118 and is recorded in a storage part 118d.

In the IC tag 119 stuck to the reagent container 102, at least an item ID unique to a reagent item, a sequence ID unique to the reagent container 102, and a use history parameter for discrimination of whether the reagent container 102 is unused are written. The use history parameter includes two kinds of information, "unused" and "in use." A reagent information file including reagent information is stored in the storage part 118d of the controller 118 in advance. The item ID of a reagent and the reagent filling amount corresponding to the reagent item in the reagent bottle 104 are described in the reagent information file.

The dispensing unit 106 that can rotate and vertically move is installed between the incubator 110 and the reagent disk 103, and includes a probe 201 that can access the inside of the reagent bottle 104. Because the necessity to prevent contamination between reagents is high, a single-use disposable chip 111 is used for the dispensing unit 106 and dispensing is executed.

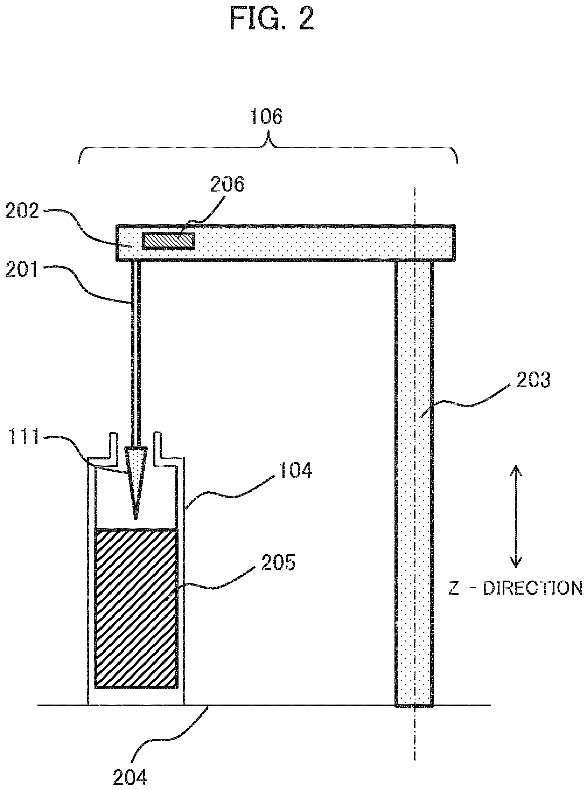

The configuration of the dispensing unit 106 is illustrated in FIG. 2. As illustrated in FIG. 2, the dispensing unit 106 is composed of the probe 201, an arm 202, and an arm shaft 203. The arm shaft 203 is fixed to a base 204. This allows the probe 201 to rotate in a θ-direction around the arm shaft 203. Furthermore, the configuration is made to allow the probe 201 to be vertically driven in a Z-direction. Based on this, the probe 201 executes dispensing operation, while moving in an arc around the rotation axis, of aspirating a reagent 205 accommodated in the reagent bottle 104 of the reagent container 102 and discharging the reagent 205 into the reaction container 109.

Moreover, as illustrated in FIG. 2, the probe 201 has, in the arm 202, an electrostatic capacity sensor 206 for detecting change in the electrostatic capacity when the tip of the disposable chip 111 gets contact with the reagent 205 in the reagent container 102, and the position of the liquid level in the height direction can be checked. For this purpose, the probe 201 is manufactured by an electrically-conductive metal member, whereas the disposable chip 111 is manufactured by an electrically-conductive resin material.

Referring back to FIG. 1, a chip sensor 112 for sensing whether or not the disposable chip 111 attached to the probe 201 exists is disposed around the operation trajectory of the probe 201 of the dispensing unit 106.

Furthermore, the following positions and so forth exist on the trajectory of the probe 201: aspiration positions 107 of reagents to be aspirated from three reagent bottles 104 on the reagent disk 103, a dispensing position on the incubator 110, the washing tank 108 for washing the disposable chip 111 mounted on the tip of one probe 201, a chip supplying position 113 for attaching the disposable chip 111 that is unused to the tip of the probe 201, and a chip discarding position 114 for discarding, into a discarding box, the disposable chip 111 that is attached to the tip of the probe 201 and has been used.

A plurality of disposable chip 111 that are unused are lined up on a magazine 115. The automatic analyzer 101 includes the conveying unit 116 that operates in X-, Y-, and Z-directions for conveying the disposable chip 111 from the magazine 115 to the chip supplying position 113.

In the dispensing unit 106, a reagent is aspirated by the disposable chip 111 mounted on the probe 201. Then, in the reaction container 109 set in the incubator 110, a sample dispensed into the reaction container 109 at a different timing in advance and the reagent are stirred and mixed by aspiration-discharge operation of the probe 201 or the disposable chip 111. The reaction container 109 that accommodates a reacted liquid resulting from the mixing of the sample and the reagent is managed at a predetermined temperature by the incubator 110, and reaction is promoted for a predetermined time.

A spectrophotometer (illustration is omitted) for biochemical inspection is disposed around the incubator 110. The spectrophotometer measures the absorbance of a reacted liquid resulting from mixing of a sample and a reagent, by dispersing and detecting transmitted light obtained through irradiating the reacted liquid with a light source.

Furthermore, the reacted liquid resulting from reaction for a predetermined time by the incubator 110 can be brought to a detection mechanism (illustration is omitted) for immunological inspection by a detector syringe (illustration is omitted) and be measured. In the immunological inspection, as a method for detecting a labeled substance, there is a method in which electrochemiluminescence or chemiluminescence is employed as the principle. In those methods, a second liquid container, a labeled substance, and the structure and properties of a detection area suitable for each are selected, and the amount of luminescence that derives from luminescence reaction of the labeled substance is measured with use of a photomultiplier tube as the detector.

The reaction container 109 about which measurement of the absorbance has been completed in the incubator 110 is discarded to the chip discarding position 114 by the conveying unit 116. Regarding movement, to the detection mechanism, of the reaction container 109 in which the reacted liquid resulting from reaction for a predetermined time by the incubator 110, and also movement, to the chip discarding position 114, of the reaction container 109 about which measurement has been completed in the detection mechanism, discarding to the chip discarding position 114 is executed by the conveying unit 116.

Each unit in the above-described automatic analyzer 101 is connected to the controller 118 through the interface 117.

The controller 118 is a computer including a CPU, a memory, and so forth and is connected to pieces of equipment in the above-described automatic analyzer 101, and controls operation of the respective pieces of equipment and mechanisms in the automatic analyzer 101. In FIG. 1, illustration is made with omission of the connection between the respective mechanisms that configure the automatic analyzer 101 and the controller 118 for simplification of illustration.

The controller 118 is composed of an operating part 118a, a control part 118b, a display part 118c, the storage part 118d, a computing part 118e, and the judgement part 118f.

The operating part 118a is operation equipment, such as a keyboard or mouse, operated when a user of the automatic analyzer 101 inputs some kind of instruction to the analyzer.

The control part 118b controls rotational driving of the incubator 110, rotational operation of the reagent disk 103, operation of driving, reagent aspiration, and reagent discharge of the dispensing unit 106 including the probe 201, and so forth. The control of the operation of the respective pieces of equipment by the control part 118b is executed based on various programs recorded in the storage part 118d.

The control processing of operation executed in the control part 118b may be marshaled into one program or the respective kinds of control processing may be separated into a plurality of programs, or the control processing may be a combination of them. Moreover, part or all of the programs may be implemented by dedicated hardware or may be modularized.

The display part 118c is display equipment, such as a liquid crystal display, that displays, for an operator, an input screen of various parameters and setting, analysis inspection data of first inspection or re-inspection, a measurement result, and various kinds of information in the automatic analyzer 101, such as reagent information. The display part 118c can be made into a touch panel system that doubles as the control part 118b.

The storage part 118d is formed of a storage medium such as an HDD or SSD in which various parameters input through the operating part 118a, information on a measurement-target sample (sample type information and so forth), measurement results, and so forth are stored besides various programs used for measurement of a sample.

Moreover, the storage part 118d stores information required to control the automatic analyzer 101, the current situation of the automatic analyzer 101, and so forth and affects operation of the controller 118. In the present embodiment, the storage part 118d stores information on a first position P_{T} higher than a liquid level value P₀ assumed to be the height of a liquid level to be described later by a first predetermined value D_{b}, a second position P_{F} higher than the first position P_{T} by a second predetermined value, a third position P_{H} higher than the second position P_{F} by a third predetermined value, a fourth position higher than the third position P_{H} by the third predetermined value, and so forth.

The computing part 118e executes computation processing to obtain the concentration of a predetermined component in a sample from a detection result of the spectrophotometer or the detection mechanism. The computing part 118e is a part that determines whether the reagent container 102 can be used for sample measurement when reading of specific information of a reagent in the IC tag 119 read by the RFID reader/writer 105 has been normally executed. When the determination has been normally executed, the reagent container 102 is registered in the storage part 118d.

In the present embodiment, in particular, the judgement part 118f causes the probe 201 to descend in the direction toward the reagent 205 and suspends the descent of the probe 201 at the first position P_{T} higher than the liquid level value P₀ assumed to be the height of the liquid level by the first predetermined value D_{b}. The judgement part 118f determines that an abnormality does not exist in the reagent 205 when the liquid level is not detected at the first position P_{T} by the electrostatic capacity sensor 206, and determines that an abnormality exists in the reagent 205 when the liquid level is detected by the electrostatic capacity sensor 206 before the probe 201 reaches the first position P_{T}. Details thereof will be described later.

The above is the configuration of the automatic analyzer 101.

Although the dispensing position of a sample has not been described in FIG. 1, for example, a form in which reagent containers and sample containers accommodating samples are stored in one disk can be employed.

Furthermore, the automatic analyzer 101 is not limited to the form in which samples and reagents are stored in the same disk, and it is possible to employ a form in which they are stored in different dedicated disks. In this case, as the dispensing unit, one or more dispensing units exclusively for reagent dispensing and one or more dispensing units for sample dispensing can be each installed for exclusive use. It is desirable that the dispensing unit exclusively for the sample and the dispensing unit exclusively for the reagent are disposed, or operation parameters thereof are set in such a manner that operation thereof do not overlap with each other.

Moreover, the configuration of the automatic analyzer 101 is not limited to the form like that illustrated in FIG. 1 and can be made into an analyzer that executes analysis of various analysis items, such as an immunological analyzer that executes analysis of immunological analysis items or a biochemical analyzer that executes analysis of biochemical analysis items. In addition, the automatic analyzer 101 can be made into an analyzer that is additionally equipped with analysis equipment that measures another analysis item such as an electrolyte.

Furthermore, the automatic analyzer 101 is not limited to the form in which it is made into a single analysis module configuration like that illustrated in FIG. 1, and can be made into a configuration in which two or more modules, such as an analysis module that can measure various identical or different analysis items and a pretreatment module that executes pretreatment, are connected by a conveying unit.

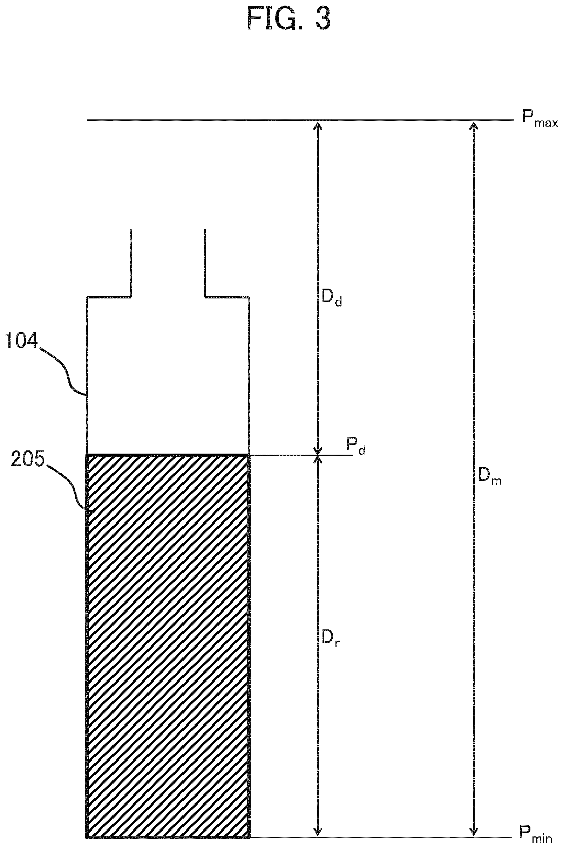

Subsequently, description will be made with use of FIG. 3 and subsequent diagrams about details of determination of whether or not an abnormality of a reagent in the reagent bottle 104 exists in the dispensing unit 106 in reagent registration.

First, an abnormality detection method using a real liquid level detection position will be described with use of FIG. 3.

### <Abnormality Detection Method Using Real Liquid Level Detection Position>

In liquid level detection, the probe 201 descends in the Z-direction from an uppermost point (Pₘₐₓ) in the vertical operation range toward the liquid level of the reagent 205 existing directly under the probe 201, and suspends the descent operation when detecting the liquid level. Here, the distance from the uppermost point (Pₘₐₓ) to a liquid level detection position (P_{d}) is defined as a distance D_{d}.

When the distance from the uppermost point (Pₘₐₓ) to a lowermost point (Pₘᵢₙ) is defined as a distance Dₘ, a descent distance Dᵣ = Dₘ - D_{d} holds. Because Dₘ is a fixed value defined on the analyzer in advance, Dᵣ can be derived from D_{d}.

The shape of the reagent container 102 is defined, and conversion from the liquid level detection position (P_{d}) to a filling amount (V) of the reagent 205 can be made by a conversion expression. Using the above-described relationship expression, conversion to an initial liquid level position (P₀) obtained from an initial filling amount V₀ of the reagent 205 known in advance is made, and an abnormality of the liquid level state can be determined from the difference from the actual liquid level detection position (P_{d}) .

For example, it turns out that it is determined that the actual filling amount is large with respect to the initial filling amount when P_{d} - P₀ = 5 [mm] in the case in which a threshold of the difference is defined as P_{d} - P₀ ≥ 3 [mm]. In this case, the current state is identified as an abnormal liquid level rise attributed to bubble mixing and is determined as an abnormality.

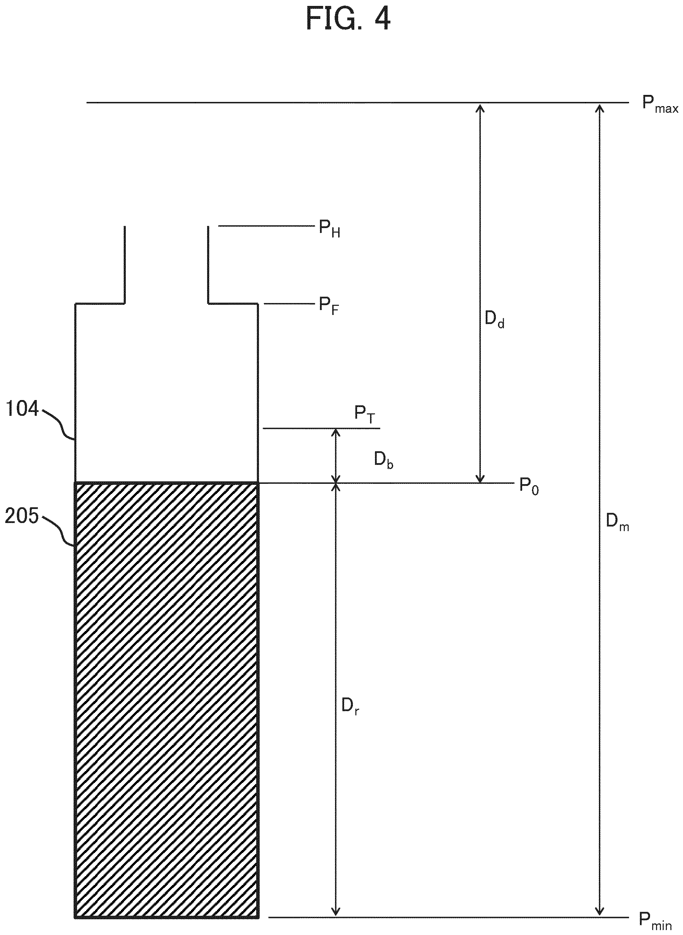

Subsequently, description will be made with use of FIG. 4 about an abnormality detection method using theoretical liquid level information that is characteristic in the present embodiment.

### <Abnormality Detection Method Using Theoretical Liquid Level Information>

In the abnormality detection method using the above-described real liquid level detection position, the probe 201 needs to be brought into contact with the liquid level for liquid level sensing. Thus, the tip of the probe 201 needs to be washed every time in order to prevent the reagent 205 adhering to the probe 201 after liquid level detection from mixing into another reagent bottle 104 and carrying over.

In the case of mounting the disposable chip 111 on the tip of the probe 201 and executing abnormality detection, one or more disposable chips 111 are consumed. In addition, the disposable chip 111 needs to be replaced for each reagent bottle 104 in order to prevent the reagent 205 adhering to the disposable chip 111 from mixing into another reagent bottle 104 and carrying over. Alternatively, the tip of the disposable chip 111 needs to be washed by a washing liquid. Also in the case of the probe 201 on which the disposable chip 111 is not mounted on the tip (form of a second embodiment to be described later), the probe 201 needs to be washed after every liquid level detection in order to avoid the carry over between the reagent bottles 104, similarly.

Therefore, there is a disadvantage that consumption of the disposable chip 111 and the replacement time of the disposable chip 111 or consumption of the washing water and the time of washing by the washing water increase according to the number of reagent bottles 104 that become a target of abnormality detection.

In abnormality detection using the theoretical liquid level information that can solve the above-described problem and is illustrated in FIG. 4, instead of the distance (D_{d}) by which descent is made until the liquid level is detected, the position P_{T} (first position P_{T}) of P₀ + D_{b} resulting from summing up the liquid level position P₀ calculated from the initial filling amount V₀ and a bubble judgement distance D_{b} is converted to the motor driving amount, and descent operation is executed by the driving amount.

For example, when the bubble judgement distance D_{b} is set to 3 [mm], the probe 201 descends to a position higher than P₀ by 3 [mm] in the direction from the liquid level toward the upper side. Thus, the probe 201 does not get contact with the reagent 205 in the reagent bottle 104 in the period from the start to the suspension of the descent operation. If the liquid level is not detected during the execution of this descent operation, the judgement part 118f determines that an abnormality does not exist in the reagent bottle 104, for example, that a bubble or liquid film does not exist and the reagent bottle 104 is in a normal state, and it turns out that there is no problem in registration and use.

Furthermore, when the liquid level is detected between a narrowed part of the inlet of the reagent bottle 104 (second position P_{F} higher than the first position P_{T} by the second predetermined value) and the first position P_{T}, the judgement part 118f considers that there is a high possibility that a bubble (foam) has been generated in the reagent 205, and determines that an abnormality exists.

Moreover, when the liquid level is detected between the third position P_{H} higher than the second position P_{F} by the third predetermined value and the second position P_{F}, that is, in the narrowed part of the inlet of the reagent bottle 104, the judgement part 118f determines that an abnormality exists because there is a high possibility that a film-shaped bubble (film, liquid film) of the reagent 205 has been generated in the narrowed part of the inlet of the reagent bottle 104.

In addition, when the liquid level is detected between a position higher than the inlet of the reagent bottle 104 (fourth position (Pₘₐₓ) higher than the third position P_{H} by the third predetermined value) and the inlet of the reagent bottle 104 (third position P_{H}), the judgement part 118f determines that hovering has occurred, that is, an abnormality exists in the electrostatic capacity sensor 206, which is the liquid level detection mechanism.

Here, the initial filling amount V₀ varies depending on the kind of reagent, and therefore it is desirable to use information read from the IC tag 119, and it is assumed that the information varies for each kind of reagent.

The first position P_{T}, the second position P_{F}, and the third position P_{H} may not be varied depending on the kind of reagent. Alternatively, they may be varied for each kind of reagent or for each shape of the reagent bottle 104. They are not particularly limited.

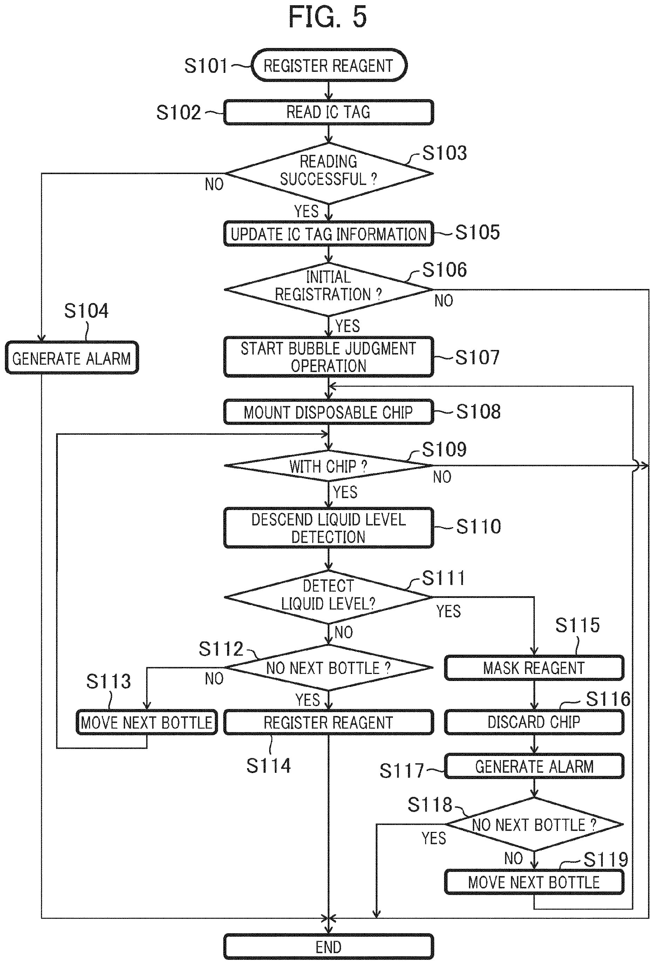

Next, description will be made with use of FIG. 5 about the procedure of reagent registration using the abnormality detection method using the theoretical liquid level information. FIG. 5 is a bubble detection workflow diagram in the case in which the disposable chip is used.

In the automatic analyzer 101 like that in the present embodiment, the reagent container 102 according to an item of measurement of a sample needs to be recognized by the analyzer and be registered. Thus, as illustrated in FIG. 5, reagent registration operation is started (step (hereinafter, described as "S") 101). The reagent container 102 is composed of three reagent bottles 104 as described above.

At the time of initial reagent registration, when a user has set the reagent container 102 on the reagent disk 103 to start the reagent registration, the reagent disk 103 rotates and the reagent container 102 is conveyed to the position of the RFID reader/writer 105, and reading of the IC tag 119 of the reagent container 102 is started by the RFID reader/writer 105 (S102).

Thereafter, the judgement part 118f determines whether or not the reading of the specific information has succeeded and a read item ID corresponds with an item ID stored in the storage part 118d in advance (S103). The processing is advanced to S105 when it is determined that the item IDs correspond with each other. In contrast, when the item IDs do not correspond with each other, the processing is advanced to S104 and an alarm is displayed on the display part 118c (S104), and the registration processing is completed.

When it is determined that the item IDs correspond with each other in S103, the judgement part 118f can read out the reagent filling amount unique to the reagent item, and updates the information of the IC tag 119 (S105) and determines whether or not the registration of the reagent is the initial registration (S106). When it is determined that the registration is not the initial registration, the reagent registration processing is ended.

In contrast, when it is determined that the registration is the initial registration, the processing is advanced to S107 to make a transition to bubble detection operation (S107).

Upon the start of the bubble detection operation, the probe 201 is moved to the chip supplying position 113 and the disposable chip 111 is mounted (S108).

Next, the probe 201 on which the disposable chip 111 is mounted moves to the position of the chip sensor 112, and whether or not the disposable chip 111 exists is determined (S109). When it is determined that the disposable chip 111 is not mounted, the reagent registration processing is ended.

In contrast, when it is determined that the disposable chip 111 is mounted, the probe 201 is moved to the aspiration position of the first reagent bottle 104 of the reagent container 102, and is caused to descend by a movement amount corresponding to the reagent filling amount of the first reagent bottle 104 (S110).

It is determined whether or not the liquid level has been detected in the period from the start of the descent operation to the end of the descent operation (5111). When it is determined that the liquid level has not been detected, it is determined that a bubble is not mixed in the reagent bottle 104, and the processing is advanced to S112, so that the probe 201 executes ascent operation to return to the uppermost point and whether or not registration of the next reagent bottle 104 is necessary is determined (S112).

When it is determined that registration of the next reagent bottle 104 is necessary, the processing is advanced to S113 to make movement to the aspiration position of the second reagent bottle 104 (S113). Subsequently, the reagent disk 103 rotates to move the second reagent bottle 104 to the aspiration position of the second reagent bottle 104. Then, the processing is returned to S109 and the probe 201 moves to the chip sensor 112 and whether or not the chip exists is determined (S109). Then, the probe 201 descends by a movement amount corresponding to the reagent filling amount of the second reagent bottle 104 again (S110).

When liquid level detection is not executed in the period from the start of the descent operation to the end of the descent operation similarly to the first reagent bottle 104 (no of S111), it is determined that a bubble is not mixed also in the second reagent bottle 104. Thereafter, whether or not registration of the next reagent bottle 104 is necessary is determined (S112) and movement to the aspiration position is made (S113). Then, determination of whether or not an abnormality of the third reagent bottle 104 exists is executed (S109 to S111).

When it is determined that the liquid level has not been detected and a bubble is not mixed from the first reagent bottle 104 to the third reagent bottle 104, that is, when it is determined that registration of the next reagent bottle 104 is not necessary in S112, the relevant reagent container 102 is deemed to be usable for measurement and is registered in the analyzer (S114), and the reagent registration operation is ended.

In this manner, also in the case of registering a plurality of reagent containers 102, when reagent registration succeeds by the above-described process, the probe 201 starts bubble judgement operation of the first reagent bottle 104 of the second reagent container 102 without discarding the disposable chip 111. It is possible to execute bubble judgement by using the same disposable chip 111 similarly also when the third and subsequent reagents exist.

In contrast, when it is determined in Sill that the liquid level has been detected although it is not detected in theory, that is, when a foam or film exists in any reagent bottle 104 and liquid level detection has been sensed, and further, when it is determined that hovering has occurred, the processing is advanced to S115 and the relevant reagent container 102 is masked without being registered (S115). In addition, the probe 201 moves to the chip discarding position 114 to discard the disposable chip 111 that has been used (S116).

Moreover, an alarm is displayed on the display part 118c (S117), and it is indicated that bubble judgement has been made regarding the relevant reagent container 102, to display a message that prompts the user to take out the reagent container 102 and visually check the mixing of the bubble or film to remove it and execute reregistration.

Thereafter, it is determined whether or not the reagent container 102 for which the initial registration is necessary exists besides the reagent container 102 regarding which bubble judgement has been made (S118). When bubble detection operation has not been executed, the reagent registration needs to be continued. Thus, in this case, the reagent disk 103 is rotated to make movement to the aspiration position of the relevant reagent bottle 104 (S119). Then, the processing is returned to S108, and the disposable chip 111 that is unused is grasped from the magazine 115 by the conveying unit 116 and is set at the chip supplying position 113. In addition, the probe 201 is moved to the chip supplying position 113 and the disposable chip 111 is mounted (S108). Then, bubble judgement of the reagent container 102 for which bubble detection operation has not been executed is started (S109 and subsequent steps).

In contrast, when it is determined in S118 that bubble judgment of all reagent containers 102 has ended, the reagent registration operation is ended.

Next, effects of the present embodiment will be described.

The automatic analyzer 101 of the above-described first embodiment includes the probe 201 that dispenses the reagent 205 to be accommodated in a container, the electrostatic capacity sensor 206 that detects the liquid level of the reagent 205, and the judgement part 118f that causes the probe 201 to descend in the direction toward the reagent 205 and suspends the descent of the probe 201 at the first position P_{T} higher than the liquid level value P₀ assumed to be the height of the liquid level by the first predetermined value D_{b}. Furthermore, the judgement part 118f determines that an abnormality does not exist in the reagent 205 when the liquid level has not been detected by the electrostatic capacity sensor 206 at the first position P_{T}, and determines that an abnormality exists in the reagent 205 when the liquid level has been detected by the electrostatic capacity sensor 206 before the probe 201 reaches the first position P_{T}.

According to such a configuration, when the automatic analyzer has the function of executing bubble detection at the time of reagent registration, the frequency of washing of the probe 201 or the frequency of replacement of the disposable chip 111 at the time of reagent registration can be lowered compared with conventional cases and consumption of consumables can be reduced compared with conventional cases. Furthermore, the above-described configuration provides an effect that the occurrence of the washing time of the tip of the probe 201 or the replacement time of the disposable chip 111 after every determination can be suppressed and causing of delay of inspection can be reduced compared with conventional cases. Moreover, because the function of executing buddle detection at the time of reagent registration can be incorporated, execution of bubble judgement after measurement start can also be suppressed and more causing of delay of inspection can also be prevented.

Furthermore, the judgement part 118f determines that a bubble has been generated in the reagent 205 when the liquid level is detected between the second position P_{F} higher than the first position P_{T} by the second predetermined value and the first position P_{T}, and determines that a film of the reagent 205 has been generated when the liquid level is detected between the third position P_{H} higher than the second position P_{F} by the third predetermined value and the second position P_{F}. Therefore, determination can be executed also regarding what kind of abnormality has occurred in the reagent bottle 104.

Moreover, the judgement part 118f determines that an abnormality exists in the liquid level detection function when the liquid level is detected between the fourth position higher than the third position P_{H} by the third predetermined value and the third position P_{H}. This allows the judgement part 118f to determine also whether or not an abnormality in the electrostatic capacity sensor 206 exists.

### <Second Embodiment>

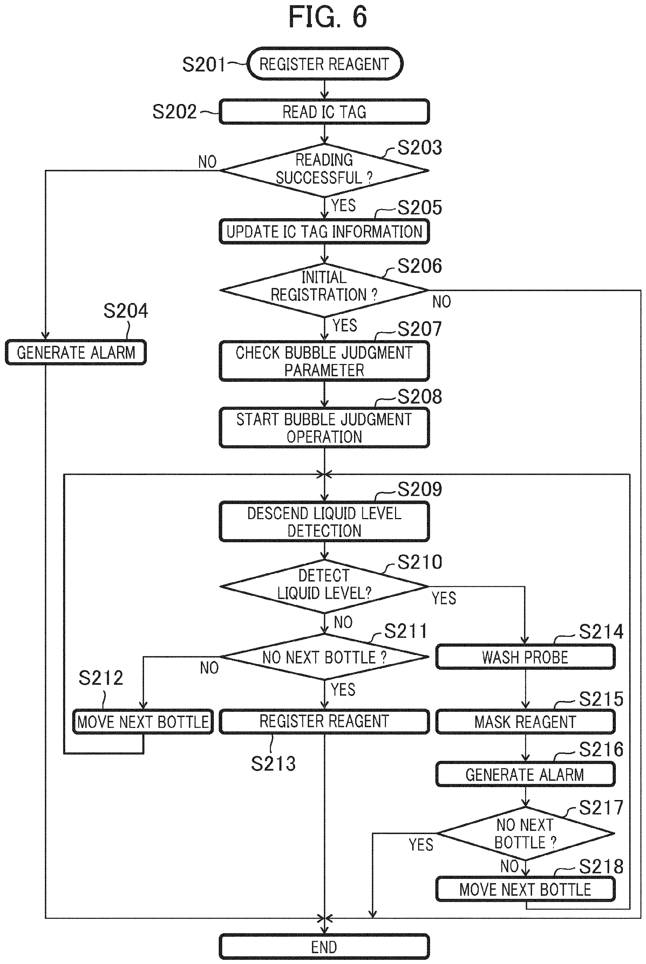

An automatic analyzer of the second embodiment will be described with use of FIG. 6. FIG. 6 illustrates a bubble detection workflow in the case in which the probe in the automatic analyzer of the present second embodiment is used.

The automatic analyzer of the present embodiment has a form in which the disposable chip 111 is not mounted on the tip of the probe 201 of the dispensing unit 106 of the automatic analyzer 101 described in the first embodiment and the probe 201 directly gets contact with the reagent 205.

Description will be made with use of FIG. 6 about the procedure of reagent registration using the abnormality detection method using the theoretical liquid level information in the automatic analyzer of the present embodiment.

S201 to S206 illustrated in FIG. 6 are the same as S101 to S106 in FIG. 5 described in the first embodiment.

In the present embodiment, as illustrated in FIG. 6, bubble determination parameter check is executed (S207), and bubble detection operation is started (S208) with omission of mounting of the disposable chip 111 and determination of whether or not it is mounted differently from FIG. 5. This S208 is the same as S107. S209 to S213 are the same as S110 to S114.

When it is determined in S210 that the liquid level has been detected although it is not detected in theory, the probe 201 is washed (S214), and the relevant reagent container 102 is masked without being registered (S215).

### S216 to S218 are the same as S117 to S119.

The other configuration and operation are substantially the same configuration and operation as the automatic analyzer of the first embodiment and details thereof are omitted.

Also in the form in which the disposable chip 111 is not mounted on the tip of the probe 201 and the probe 201 directly gets contact with the reagent 205 as in the automatic analyzer of the second embodiment, almost the same effects as the automatic analyzer 101 of the above-described first embodiment are obtained.

The following form is cited as a modification example of the present second embodiment.

A first round of bubble detection operation is executed for each reagent bottle 104. After it is determined that a bubble has been detected (yes of S210), the probe 201 is returned to the uppermost point without shifting the processing to S214, and a second round of bubble detection operation is executed for the reagent bottle 104 in which the bubble has been detected. Then, when a bubble is not detected in the second round of detection operation, the judgement part 118f determines that the bubble has been eliminated by the first round of bubble detection, and can allow the reagent of the relevant reagent bottle 104 to be unmasked.

Moreover, the bubble judgement accuracy can be improved by setting the bubble judgement distance D_{b} regarding each reagent item. For example, a reagent item with low content of a surfactant has low likelihood of formation of a large bubble in the reagent bottle 104. Thus, bubble detection also for a minuter bubble is enabled by changing D_{b} from 3 [mm] to 2 [mm]. In this case, bubble judgement parameter check is executed regarding each reagent before the start of bubble judgement operation, and a judgement threshold corresponding to the reagent item is read out to execute the bubble judgement operation.

### <Third Embodiment>

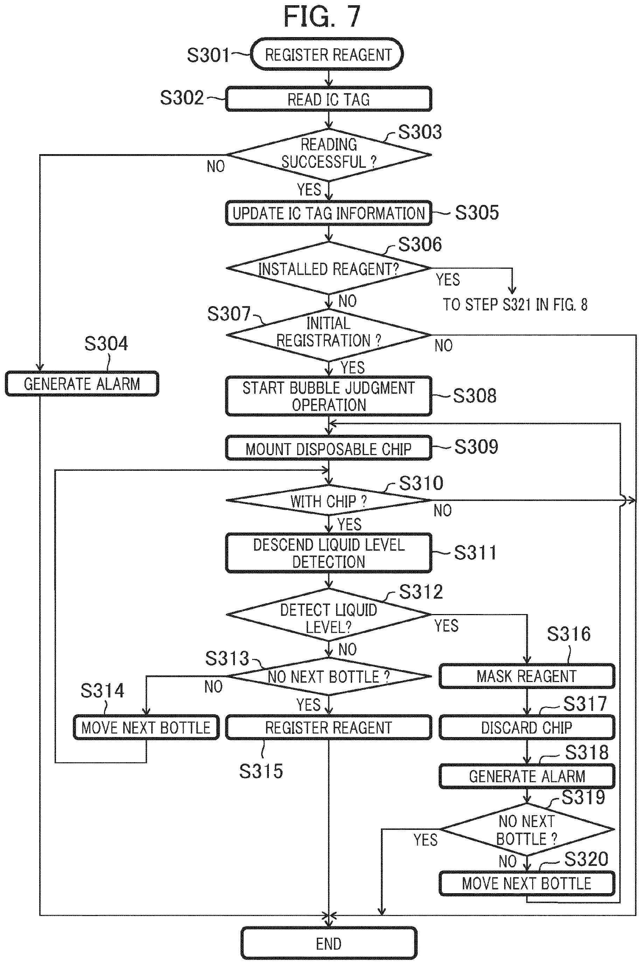

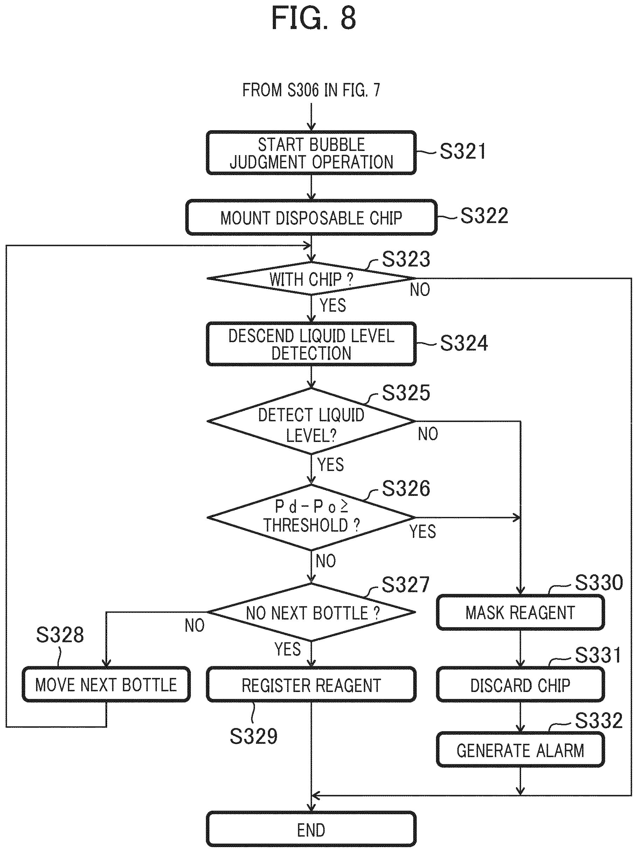

An automatic analyzer of a third embodiment will be described with use of FIGs. 7 and 8. FIGs. 7 and 8 illustrate a workflow of bubble detection in the case in which an installed reagent is used.

The forms of the first embodiment and the second embodiment are the forms in which the probe 201 descends to the position higher than the assumed liquid level by the predetermined height and it is determined that a bubble is not mixed when the liquid level is not detected during the descent operation. As a precondition of this determination, it is assumed that the filling amount information of the reagent bottle 104 is stored in the storage part 118d or the IC tag 119 stuck to the reagent bottle 104.

Here, when the actual filling amount is significantly small compared with the information, it is impossible to accurately execute bubble detection. For example, a reagent for analyzer installation evaluation is often used between different automatic analyzers as an index for determining whether the state at the time of analyzer installation is normal or abnormal. This reagent will be referred to as an installed reagent.

When the installed reagent has been antecedently used in another analyzer, the real reagent remaining amount has decreased compared with the reagent amount in the reagent filling amount information in the IC tag 119, and thus there is a possibility that divergence from the information of the IC tag 119 occurs. In determination of such an installed reagent, it is more convenient to actually execute detection of the liquid level illustrated in FIG. 3 and update the real remaining amount instead of stopping the probe 201 at the position higher than the liquid level illustrated in FIG. 4 by the predetermined height.

Thus, in the present embodiment, whether the reagent 205 is a reagent for general measurement item or an installed reagent is defined in the information region of the IC tag 119 of the reagent bottle 104, and the control part 118b executes switching between the mode in which the probe 201 is brought into direct contact with the reagent 205 (see FIG. 3) and the mode in which the probe 201 is suspended at the first position P_{T} (see FIG. 4) on the basis of whether or not the kind of reagent 205 is the installed reagent.

Description will be made with use of FIGs. 7 and 8 about the procedure of reagent registration using the abnormality detection method in which the bubble detection operation method is switched item by item in the automatic analyzer of the present embodiment.

S301 to S305 illustrated in FIG. 7 are the same as S101 to S105 illustrated in FIG. 5.

Subsequently, the judgement part 118f determines whether or not the reagent container 102 of the target is an installed reagent on the basis of the read specific information (S306). The processing is advanced to S307 when it is determined that the reagent container 102 is not an installed reagent. S307 to S320 are the same as S106 to S119.

In contrast, when it is determined that the reagent container 102 is an installed reagent, the processing is advanced to S321 illustrated in FIG. 8 to start bubble judgement operation (S321).

First, the disposable chip 111 is mounted (S322) and whether or not the disposable chip 111 exists is determined (S323). Then, the probe 201 is caused to descend until reaching the liquid level (S324).

Subsequently, whether or not the liquid level has been detected is determined (S325), and the processing is advanced to S330 when the liquid level has not been detected. In contrast, when the liquid level has been detected, subsequently it is determined whether or not the difference between the liquid level detection position (P_{d}) and the initial liquid level position (P₀) is equal to or larger than a predetermined threshold (preferably, value obtained by adding a predetermined error to the assumed liquid level based on the number of times of past use) (S326). When it is determined that the difference is smaller than the predetermined threshold, the processing is advanced to S327 to determine whether or not registration of the next reagent bottle 104 is necessary (S327). When it is determined that registration of the next reagent bottle 104 is necessary, the processing is advanced to S328 to make movement to the aspiration position of the second reagent bottle 104 (S328). Then, determination is similarly executed (S323 and so forth).

In contrast, when it is determined that registration of the reagent bottle 104 is not necessary in S327, the relevant installed reagent is deemed to be usable for measurement and is registered in the storage part 118d (S329), and the reagent registration operation is ended.

When the liquid level has not been detected in the above-described S325 or when it is determined in S326 that the difference is equal to or larger than the predetermined threshold, the judgement part 118f masks the relevant installed reagent without registering it (S330). In addition, the control part 118b moves the probe 201 to the chip discarding position 114 to discard the disposable chip 111 that has been used (S331). Moreover, an alarm is displayed on the display part 118c (S332), and the registration processing is completed.

The other configuration and operation are substantially the same configuration and operation as the automatic analyzer of the first embodiment, and details thereof are omitted.

Also in the automatic analyzer of the third embodiment, almost the same effects as the automatic analyzer of the above-described first embodiment are obtained.

Furthermore, the control part 118b executes switching between the mode in which the probe 201 is brought into direct contact with the reagent 205 and the mode in which the probe 201 is suspended at the first position P_{T}. This allows the control part 118b to execute bubble judgement also regarding a reagent involving divergence between the initial filling amount information and the real liquid remaining amount, such as a reagent for analyzer inspection, as well as the bubble judgement function that can reduce consumption of consumables.

Moreover, the control part 118b executes switching between the mode in which the probe 201 is brought into direct contact with the reagent 205 and the mode in which the probe 201 is suspended at the first position P_{T} depending on the kind of reagent 205. This allows the control part 118b to execute bubble judgement also regarding a reagent involving divergence between the initial filling amount information and the real liquid remaining amount, such as a reagent for analyzer inspection, as well as the bubble judgement function that can reduce consumption of consumables.

The form in which switching is executed between the mode in which direct contact to a liquid is made and whether or not an abnormality exists is detected and the mode in which an abnormality is detected without contact to a liquid as in the present embodiment can be applied also to the form in which the probe 201 gets direct contact with a liquid without using the disposable chip 111 as in the second embodiment.

<Others>

The present invention is not limited to the above-described embodiments and various modification examples are included therein. The above-described embodiments are described in detail in order to explain the present invention in an easy-to-understand manner, and are not necessarily limited to that including all configurations described.

Furthermore, it is also possible to replace part of a configuration of a certain embodiment by a configuration of another embodiment. Moreover, it is also possible to add a configuration of another embodiment to a configuration of a certain embodiment. In addition, it is also possible to execute addition, deletion, or substitution of another configuration regarding part of a configuration of each embodiment.

For example, it is possible to include either dispensing unit of a unit in which the disposable chip 111 is mounted like the dispensing unit 106 of the first embodiment and the form in which the probe 201 gets direct contact with a liquid as in the dispensing unit of the second embodiment.

### List of Reference Signs

- 101: Automatic analyzer
- 102: Reagent container
- 103: Reagent disk
- 104: Reagent bottle
- 105: RFID reader/writer
- 106: Dispensing unit
- 107: Aspiration position
- 108: Washing tank
- 109: Reaction container
- 110: Incubator
- 111: Disposable chip
- 112: Chip sensor
- 113: Chip supplying position
- 114: Chip discarding position
- 115: Magazine
- 116: Conveying unit
- 117: Interface
- 118: Controller
- 118a: Operation part
- 118b: Control part
- 118c: Display part
- 118d: Storage part
- 118e: Computing part
- 118f: Judgment part
- 119: IC tag
- 201: Probe
- 202: Arm
- 203: Arm shaft
- 204: Base
- 205: Reagent
- 206: Electrostatic capacity sensor (detection part)

## Claims

1. An automatic analyzer, comprising:
a probe separately dispensing a liquid to be accommodated in a container;
a detection part detecting a liquid level of the liquid; and
a judgment part descending the probe in a direction of the liquid and suspending the downward movement of the probe at a first position higher than a liquid level value assumed to be a height of the liquid level by a first predetermined value and, at the first position, determining that the liquid is in a normal state when the liquid level is not detected by the detection part and determining that the liquid is in an abnormal state when the liquid level is detected by the detection part before reaching the first position.

2. The automatic analyzer according to claim 1 further comprising a control part controlling an operation of the probe,
wherein the control part switches a mode for allowing the probe to be in contact with the liquid directly and a mode for suspending the probe at the first position.

3. The automatic analyzer according to claim 2,
wherein the control part switches a mode for allowing the probe to be in contact with the liquid directly and a mode for suspending the probe at the first position based on a type of the liquid.

4. The automatic analyzer according to claim 1,
wherein the judgment part determines that bubbles are formed in the liquid when the liquid level is detected between a second position higher than the first position by a second predetermined value and the first position, and
wherein the judgment part determines that a film of the liquid is formed in the container when the liquid level is detected between a third position higher than the second position by a third predetermined value and the second position.

5. The automatic analyzer according to claim 4,
wherein the judgment part determines that a liquid level detection function is in an abnormal state when the liquid level is detected between a fourth position higher than the third position by a third predetermined value and the third position.

6. The automatic analyzer according to claim 1,
wherein a disposable chip is mounted on a tip portion of the probe.

7. The automatic analyzer according to claim 1,
wherein the probe is in contact with the liquid directly without a disposable chip being mounted on the tip portion of the probe.

8. The automatic analyzer according to claim 3,
wherein the control part switches the modes based on whether a type of the liquid is an installed reagent or not.

9. The automatic analyzer according to claim 1 further comprising a storage part which stores information on the first position.
